# EUROPEAN PATENT SPECIFICATION

(11) **EP 4 197 886 B1**
(45) Date of publication and mention of the grant of the patent: **08.04.2026**
(21) Application number: 22202570.2
(22) Date of filing: 19.10.2022
(51) Int. Cl.: B62D 15/02

(54) **AUTOMATIC PARKING SYSTEM**
AUTOMATISCHES PARKSYSTEM
SYSTÈME DE STATIONNEMENT AUTOMATIQUE

(30) Priority: 15.12.2021 JP 2021203508
(43) Date of publication of application: 21.06.2023
(73) Proprietor: Suzuki Motor Corporation, Hamamatsu-shi, Shizuoka 432-8611 (JP)
(72) Inventor: SUYAMA, Yozo, Hamamatsu-shi, 432-8611 (JP)
(74) Representative: Plasseraud IP

(56) References cited:
- DE-A1- 102021 107 349
- JP-A- 2018 034 541
- US-A1- 2018 162 446
- US-A1- 2018 265 079

## Description

### [Technical Field]

The present invention relates to an automatic parking system for a vehicle.

### [Background Art]

Parking assist systems and automatic parking systems for allowing vehicles to be parked at target parking spots at least partially using automatic control are becoming widespread. For example, Patent Literature 1 discloses a parking assist apparatus that performs direct parking in which a vehicle is guided to park at a target parking spot without reversing a moving direction of the vehicle, or turnaround parking in which a vehicle is guided to park at a target parking spot while reversing a moving direction of the vehicle. In this apparatus, during the turnaround parking, a flagged pole indicating a direction change stop point is displayed on a back monitor screen to allow a driver to recognize the existence of the direction change stop point and the need to stop thereat.

### [Citation List]

### [Patent Literature]

[Patent Literature 1] JP 5522485 B2
[Patent Literature 2] US2018/265079A1
[Patent Literature 3] US2018/162446A1, which shows the features of the preamble of claim 1.
[Patent Literature 4] DE10 2021 107 349 A1
[Patent Literature 5] JP 2018 034541 A

### [Summary of Invention]

### [Problems to be Solved by the Invention]

The automatic parking system generates a route up to a target parking spot based on the recognition result around the vehicle acquired by sensors or the like, and performs the automatic parking while updating the recognition result around the vehicle from the sensors as the vehicle moves. Depending on the recognition results from the sensors, a direction change stop point at which the vehicle is temporarily stopped to reverse the moving direction may be shifted or reset from a position that is set before the start of the turnaround parking. If the direction change stop point is shifted during the automatic parking by the automatic parking system, a driver might feel anxiety, or a driver who feels anxiety might perform unnecessary braking operation. Therefore, improvement of the automatic parking technology has been desired.

The present invention has been made in light of the above facts, and an object thereof is to reduce anxiety of a driver associated with automatic parking as well as to enhance convenience and comfort of the automatic parking.

### [Means for Solving the Problems]

According to one aspect of the present invention, an automatic parking system includes: an obstacle detection device configured to detect an obstacle around a vehicle; an image pickup device configured to image a peripheral region of the vehicle; a parking controller configured to set a parking route for moving the vehicle to a target parking spot based on information on the obstacle detected by the obstacle detection device and an image of the peripheral region picked up by the image pickup device, and to perform automatic parking control to park the vehicle at the target parking spot in accordance with the parking route; and a display device configured to display information about the automatic parking control, wherein the display device is configured to display a direction change stop point when the direction change stop point at which traveling direction of the vehicle is switched from forward to backward, or from backward to forward, is included in the parking route, and the parking controller is configured to limit a maximum number of updates of the direction change stop point to a first number of updates during execution of the automatic parking control.

### [Advantageous Effects of Invention]

According to the present invention, it is possible to reduce anxiety of a driver associated with automatic parking, and to enhance convenience and comfort of the automatic parking.

### [Brief Description of Drawings]

[Figure 1] Figure 1 is a side view schematically showing a vehicle equipped with an automatic parking system in a first embodiment of the present invention.
[Figure 2] Figure 2 is a plan view schematically showing the vehicle equipped with the automatic parking system in the first embodiment of the present invention.
[Figure 3] Figure 3 is a block diagram showing a configuration of the automatic parking system according to the first embodiment of the present invention.
[Figure 4] Figure 4 is a view showing an example of a parking route including direction change stop points.
[Figure 5] Figure 5 shows a display example of a display device including a mark indicating the direction change stop point.
[Figure 6] Figure 6 is a conceptual view illustrating a case in which the direction change stop point is shifted to a distal side due to updating of the parking route.
[Figure 7] Figure 7 is a conceptual view illustrating a case in which the direction change stop point is shifted to a proximal side due to updating of the parking route.
[Figure 8] Figure 8 is a flowchart explaining a flow of automatic parking control by the automatic parking system.
[Figure 9] Figure 9 is a flowchart explaining an updating process of the parking route and the direction change stop point during execution of the automatic parking control in the first embodiment.
[Figure 10] Figure 10 is a flowchart explaining the updating process of the parking route and the direction change stop point during execution of the automatic parking control in a second embodiment.
[Figure 11] Figure 11 shows a display example of the display device in which information about the maximum number of updates of the direction change stop point is displayed.

### [Modes for Carrying Out the Invention]

### First Embodiment

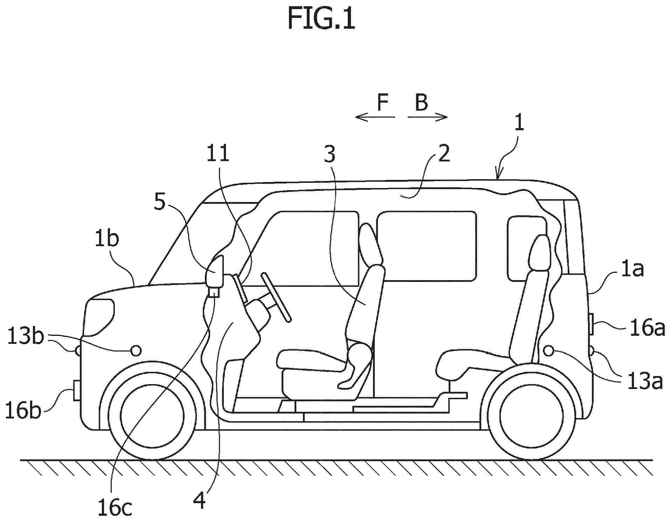

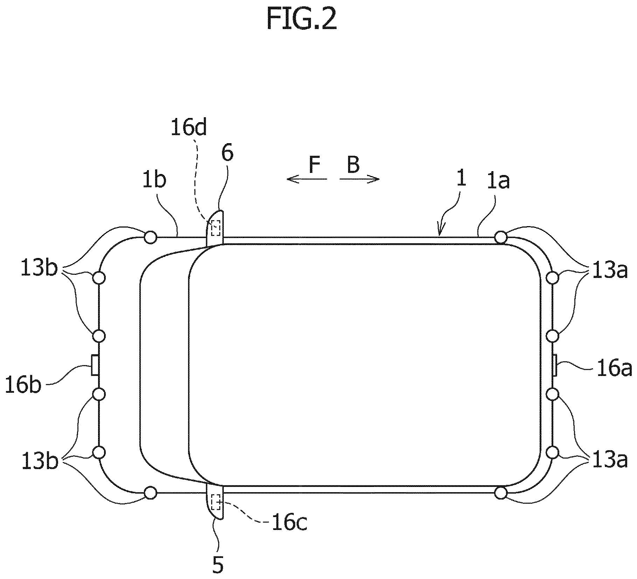

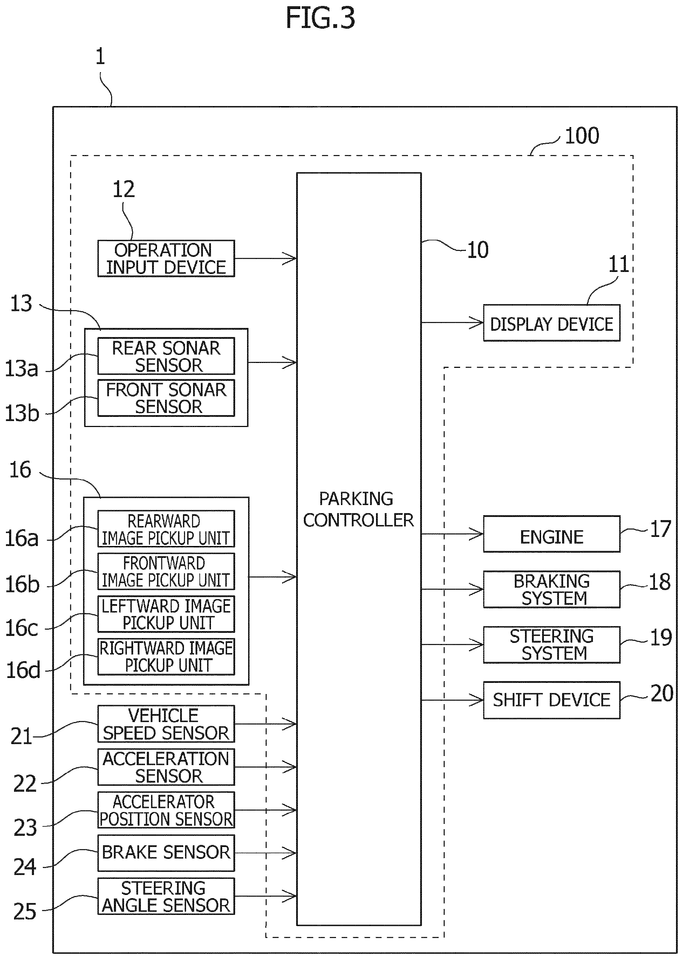

An automatic parking system of a vehicle according to a first embodiment of the present invention will be described in detail with reference to the drawings. Figure 1 is a side view schematically showing the vehicle equipped with the automatic parking system in the first embodiment of the present invention. Figure 2 is a plan view schematically showing the vehicle equipped with the automatic parking system in the first embodiment. Figure 3 is a block diagram showing the configuration of the automatic parking system in the first embodiment. In Figure 1 and Figure 2, the front side of the vehicle is indicated by an arrow F, and the rear side of the vehicle is indicated by an arrow B. In Figure 1, a part of the lateral side of the vehicle is omitted such that the inside of a vehicle interior can be visually recognized.

As shown in Figure 1 to Figure 3, a vehicle 1 equipped with an automatic parking system 100 according to the first embodiment includes an engine 17, a braking system 18, a steering system 19, and a shift device 20.

The engine 17 is a drive device that generates a driving force for running the vehicle 1, such as an internal combustion engine, and includes an engine controller (not shown) that controls the driving force in accordance with a depression amount of an accelerator pedal (not shown) by a driver or in response to a control command from a parking controller 10 described later. As the drive device of the vehicle 1, a motor or the like may be used other than the engine 17.

The braking system 18 is a braking device that generates a braking force in accordance with a depression amount of a brake pedal (not shown) by the driver. The braking system 18 includes a brake controller and a brake actuator for generating a braking force in accordance with a braking command from a vehicle system or the parking controller 10, described later.

The steering system 19 is configured as an electric power steering system (EPS), and it is configured to provide a steering angle to a steered wheel in accordance with the steering operation by the driver. The steering system 19 can control the steering angle in accordance with a steering command from the parking controller 10, described later, so as to change the traveling direction of the vehicle 1.

The shift device 20 is configured to be switchable among a D range for moving the vehicle 1 forward, a R range for moving the vehicle 1 backward, and a P range for fixing a gear of a transmission (not shown). The shift device 20 is provided with an actuator (not shown), and in accordance with a control command from the parking controller 10 described later, the shift device 20 sets to the D range when the vehicle 1 is moved forward, sets to the R range when the vehicle 1 is reversed, and sets to the P range when the vehicle 1 is temporarily stopped at the direction change stop point or the like.

The vehicle 1 is further equipped with a vehicle speed sensor 21, an acceleration sensor 22, an accelerator position sensor 23, a brake sensor 24, and a steering angle sensor 25. The vehicle speed sensor 21 detects a traveling speed of the vehicle 1. The acceleration sensor 22 detects an acceleration rate of the vehicle 1. The accelerator position sensor 23 detects the depression amount of the accelerator pedal (not shown) by the driver, that is, an accelerator position. The brake sensor 24 detects the depression amount of the brake pedal (not shown) by the driver. The steering angle sensor 25 detects the amount of steering operation by the driver.

The automatic parking system 100 provided in the vehicle 1 includes the parking controller 10, a display device 11, an operation input device 12, an obstacle detection device 13, an image pickup device 16, and others.

The parking controller 10 is implemented as a computer (ECU) including: a CPU (central processing unit) that performs arithmetic processing; a RAM (random-access memory) as a work area of the CPU and a temporary storage area of calculation results; a ROM (read-only memory) that stores operation programs for execution, various control constants, maps, etc.; an input interface; an output interface; and others. The parking controller 10 is configured to control the overall operation of the automatic parking system 100 by executing the operation programs stored in the ROM. Details of the control by the parking controller 10 will be described later.

The display device 11 is configured to provide various information to the driver through vision, and, for example, is configured as a liquid crystal monitor having a display screen for displaying an image. The display device 11 displays information about the automatic parking control on the display screen in response to a signal from the parking controller 10. The display device 11 is disposed, for example, at an instrument panel 4 so as to be visible to the driver seated in a driver's seat 3 in a vehicle interior 2 of the vehicle 1.

The operation input device 12 is configured to receive various operational inputs to the vehicle 1 by a user, such as the driver. The operation input device 12 includes an automatic parking control switch operated by the driver to switch the automatic parking control on and off. The operation input device 12 may be configured as a touch panel integrated with the display screen of the display device 11, for example.

The obstacle detection device 13 is configured to detect an object existing around the vehicle 1, that is, an obstacle relative to the vehicle 1, by transmitting and receiving laser light, ultrasonic waves, millimeter waves, and the like, and to detect a distance between the obstacle and the vehicle 1. The information on the obstacle detected by the obstacle detection device 13 is input to the parking controller 10. In the present embodiment, the obstacle detection device 13 has, for example, a rear sonar sensor 13a that detects an obstacle in a rear region of the vehicle 1 and a front sonar sensor 13b that detects an obstacle in a front region of the vehicle 1. As shown in Figure 2, the rear sonar sensor 13a has six sonar sensors arranged in a rear part 1a of the vehicle 1, and the front sonar sensor 13b has six sonar sensors arranged in a front part 1b of the vehicle 1. The number and the arrangement of the sonar sensors are not limited to those shown in Figure 2.

The image pickup device 16 is configured to pick up images of a peripheral region of the vehicle 1. In the present embodiment, the image pickup device 16 includes, for example, a rearward image pickup unit 16a arranged in the rear part 1a of the vehicle 1 and capable of imaging the rear region, a frontward image pickup unit 16b arranged in the front part 1b of the vehicle 1 and capable of imaging the front region, a leftward image pickup unit 16c arranged at a left side mirror 5 of the vehicle 1 and capable of imaging the leftward region, and a rightward image pickup unit 16d arranged at a right side mirror 6 of the vehicle 1 and capable of imaging the rightward region. The image pickup units 16a to 16d each have a digital camera having an image sensor such as a CCD and a CIS, and are configured to output information on the peripheral region of the vehicle 1 as still images and/or moving images. The images of the peripheral region picked up by the image pickup device 16 are input to the parking controller 10.

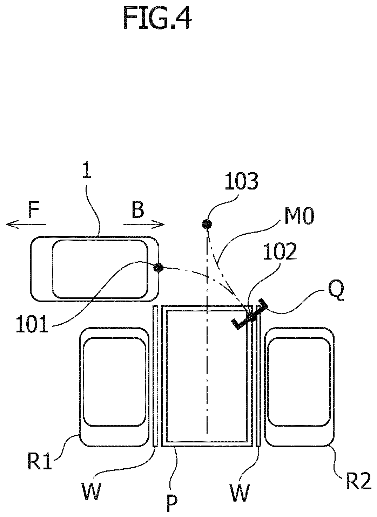

Next, the basic operation of the automatic parking system 100 will be described with reference to Figure 4. Figure 4 shows an example of the parking route used for automatically moving the vehicle 1 to a target parking spot by the automatic parking system 100.

The parking controller 10 searches for a parking space where the vehicle 1 can be parked, based on the information on the obstacles existing around the vehicle 1 detected by the obstacle detection device 13 and the images of the peripheral region of the vehicle 1 acquired by the image pickup device 16. The parking controller 10 sets a parking space P that is found as a target parking spot. In this case, as shown in Figure 4, an example of setting an area sandwiched between obstacles R1 and R2 and defined by two division lines W as the parking space P will be described.

Based on the information on the obstacles existing around the vehicle 1 and the images of the peripheral region of the vehicle 1, the parking controller 10 calculates a parking route used for moving the vehicle 1 to the parking space P from an initial position 101 of the vehicle 1 before the vehicle 1 is caused to automatically travel by the automatic parking control. In the example shown in Figure 4, a parking route M0 is generated, in which the vehicle 1 reverses from the initial position 101 of the vehicle 1 to a direction change stop point 102 so as to temporarily stop at this direction change stop point 102, then travels forward to a direction change stop point 103 so as to temporarily stop at this direction change stop point 103, and then reverses into the parking space P. The parking route M0 is indicated by one dot chain lines. Since this parking route M0 can be generated by a well-known algorithm, detailed description thereof will be omitted. At the direction change stop point 102 in Figure 4, a mark Q indicating the direction change stop point, which will be described later, is also conceptually shown.

In the example shown in Figure 4, the parking route M0 is generated by taking the information on the obstacles R1, R2 detected by the obstacle detection device 13 into account. For example, when the obstacles R1, R2 are not recognized and the parking route M0 is generated based on the image information including the division lines W that are imaged, the direction change stop point may be set at a position having a shorter distance than a detectable distance by the obstacle detection device 13. For example, when the detectable distance by the rear sonar sensor 13a and the front sonar sensor 13b is about 2.8 m, the direction change stop point can be set at a distance of about 2 m from the vehicle 1.

The parking controller 10 controls the engine 17, the braking system 18, the steering system 19, and the shift device 20 to cause the vehicle 1 to automatically travel to the parking space P in accordance with the parking route M0 that is generated.

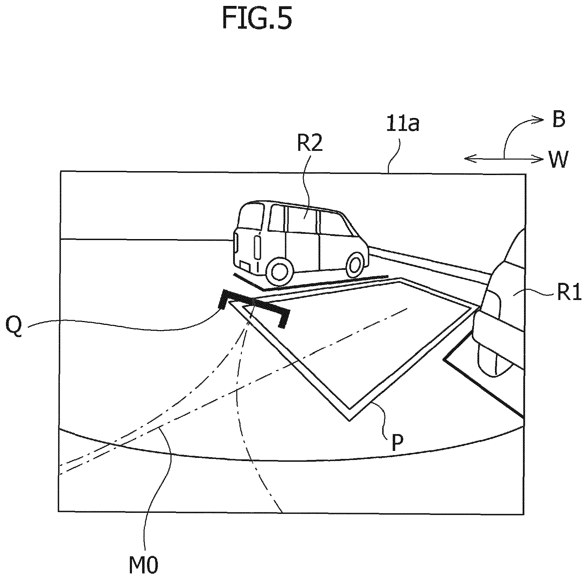

While the automatic parking control by the automatic parking system 100 is being performed, a display screen 11a of the display device 11 displays images as shown in Figure 4, Figure 5, Figure 6, and Figure 7, for example. Figure 5 shows a display example when the vehicle 1 is reversed from the initial position 101 to the direction change stop point 102 in accordance with the parking route M0. In Figure 5, the traveling direction of the vehicle 1 is indicated by an arrow B, and the vehicle width direction in the display screen 11a is indicated by an arrow W.

In the display example of the display screen 11a shown in Figure 5, an image of the rear region of the vehicle 1 including the parking space P picked up by the image pickup device 16 is displayed, and the mark Q indicating the direction change stop point is superimposed on the image of the rear region. The mark Q has an approximately bracket or U-shaped form, for example, and is displayed at a position corresponding to the direction change stop point 102 in the image of the rear region. Accordingly, it is possible to notify the driver that the vehicle 1 will be temporarily stopped at the position where the mark Q is displayed. The display form of the mark Q is not limited to the bracket-shape as shown in Figure 5, and may be formed simply as a straight line, or may be formed as a dot or a circle. The mark Q may be displayed in any color as long as the driver can be surely notified of the existence of the direction change stop point.

The parking controller 10 generates the parking route M0 based on the information on the obstacles detected by the obstacle detection device 13, the images of the peripheral region picked up by the image pickup device 16, and the like; however, the parking route M0 may be updated after the start of the automatic parking control. Although the rear sonar sensor 13a and the front sonar sensor 13b used as the obstacle detection device 13 can accurately measure three-dimensional information, the detectable distance is relatively short, for example, about 2.8 m as described above. Hence, when the vehicle 1 is moved by the automatic parking control, a new obstacle may be detected or the detailed position and shape of the obstacle may be recognized. For this reason, while the vehicle 1 is automatically traveling in accordance with the parking route M0, the parking controller 10 updates the parking route M0 based on the latest information detected by the rear sonar sensor 13a and the front sonar sensor 13b.

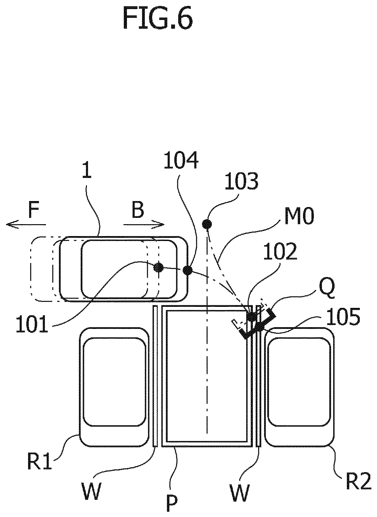

Figure 6 shows an example of a case in which the direction change stop point is shifted to the distal side from the vehicle 1 due to updating of the parking route M0. As the vehicle 1 starts to reverse from the initial position 101 by the automatic parking control, the latest information detected by the rear sonar sensor 13a and the front sonar sensor 13b is input to the parking controller 10. It is assumed that when the vehicle 1 is moved from the initial position 101 to a position 104, the parking controller 10 becomes enabled to recognize the obstacle R2 from the latest information on the obstacles detected by the rear sonar sensor 13a. **In** this case, the parking controller 10 updates the parking route M0 based on the latest information on the obstacles and generates a parking route M1 after the updating.

In the parking route M1 after the updating, the direction change stop point 102 at which the traveling direction of the vehicle 1 is switched from backward to forward is shifted to a direction change stop point 105 located at the distal side from the vehicle 1 based on the position of the obstacle R2. As conceptually shown in Figure 6, as the direction change stop point is shifted, the display position of the mark Q indicating the direction change stop point displayed on the display screen 11a is also shifted from a position indicated by alternate long and short dash lines to a position indicated by solid lines.

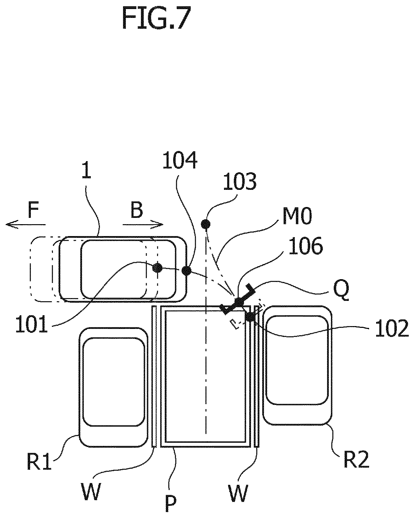

Figure 7 shows an example of a case in which the direction change stop point is shifted to the proximal side of the vehicle 1 due to the updating of the parking route M0. It is assumed that as the vehicle 1 is moved from the initial position 101 to the position 104, the parking controller 10 becomes enabled to recognize the exact position of the obstacle R2 from the latest information on the obstacles detected by the rear sonar sensor 13a. In this case, the parking controller 10 updates the parking route M0 based on the latest information on the obstacles and generates the parking route M1 after the updating. In the parking route M1 after the updating, the direction change stop point 102 at which the traveling direction of the vehicle 1 is switched from backward to forward is shifted to a direction change stop point 106 located at the proximal side of the vehicle 1. As conceptually shown in Figure 7, as the direction change stop point is shifted, the display position of the mark Q indicating the direction change stop point displayed on the display screen 11a is also shifted from a position indicated by alternate long and short dash lines to a position indicated by solid lines.

By updating the parking route M0 as described above, for example, the time required for the automatic parking control can be reduced, and the vehicle can be prevented from coming into contact with an obstacle that is newly detected. However, the updating of the parking route M0 and the shifting of the direction change stop point might give the driver anxiety. Especially in a case in which the direction change stop point is shifted toward the distal side from the vehicle 1, to be closer to the obstacle, the display position of the mark Q displayed on the display screen 11a is also shifted due to the shifting of the direction change stop point, which might give the driver anxiety that the vehicle might come into contact with the obstacle. If the driver, who feels such anxiety, manually performs unnecessary braking operation or steering operation, the time required for the parking control might increase or a parking route having less space might have to be selected.

To cope with this, the automatic parking system 100 according to the present embodiment limits the maximum number of updates of the direction change stop point when the direction change stop point is updated due to the updating of the parking route. The maximum number of updates of the direction change stop point represents a maximum number of updates for updating a single direction change stop point at which the vehicle 1 during traveling by the automatic parking control is to be temporarily stopped in order to switch the traveling direction of the vehicle 1 from forward to backward or from backward to forward. When the parking route includes a plurality of direction change stop points, the maximum number of updates is set for each of the direction change stop points. By limiting the maximum number of updates of the direction change stop point, the driver's anxiety associated with the automatic parking is reduced, and the convenience and comfort of the automatic parking are also enhanced.

Specifically, when the direction change stop point after the updating is shifted to the distal side from the vehicle 1 due to the updating of the parking route M0, the maximum number of updates is limited to a first number of updates N1. On the other hand, when the direction change stop point after the updating is shifted to the proximal side of the vehicle 1 due to the updating of the parking route M0, the maximum number of updates is limited to a second number of updates N2, which is greater than the first number of updates N1 (N1 < N2). When the direction change stop point is shifted closer to the vehicle 1, it is conceivable that a new obstacle is detected or that the obstacle is located at a position closer to the vehicle 1 than the position of this obstacle recognized at the initial position. Hence, in order to appropriately prevent the vehicle 1 from coming into contact with the obstacle, the second number of updates used for limiting the direction change stop point is set to a value greater than that of the first number of updates.

Furthermore, when the direction change stop point after the updating is shifted to the distal side from the vehicle 1, the maximum number of updates is changed in accordance with the distance between the direction change stop point after the updating and the obstacle. Specifically, when the distance between the direction change stop point after the updating and the obstacle is less than a predetermined threshold value D1, the maximum number of updates is limited to the above-mentioned first number of updates N1. On the other hand, when the distance between the direction change stop point after the updating and the obstacle is equal to or greater than the predetermined threshold value D1, or when no obstacle is detected in the traveling direction of the vehicle 1 by the obstacle detection device 13, the maximum number of updates is limited to the second number of updates N2 described above.

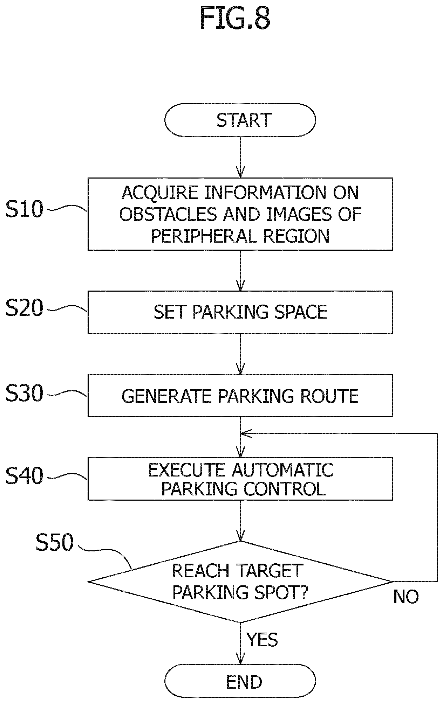

Hereinafter, the flow of the automatic parking control executed by the automatic parking system 100 according to the present embodiment will be described with reference to the flowchart in Figure 8. The process shown in Figure 8 is started when the driver operates the operation input device 12 to switch the automatic parking control on. Normally, the driver finds a parking space by himself or herself, and while the vehicle 1 is stopped near the parking space, the driver operates the operation input device 12 to switch the automatic parking control on.

First, in step S10, the parking controller 10 acquires the information on the obstacles existing around the vehicle 1 detected by the obstacle detection device 13 and the images of the peripheral region of the vehicle 1 picked up by the image pickup device 16. In step S20, the parking controller 10 searches for the parking space in which the vehicle 1 can be parked based on the information acquired in step S10 and sets the parking space P that is found as a target parking spot.

In step S30, the parking controller 10 generates the parking route M0 for moving the vehicle 1 from the position where the vehicle 1 is stopped (the initial position) to the parking space P that is the target parking spot. Accordingly, the parking route M0 as shown by the alternate long and short dash lines in Figure 4 is generated.

In step S40, the parking controller 10 executes the automatic parking control. The parking controller 10 controls the engine 17, the braking system 18, the steering system 19, and the shift device 20 to cause the vehicle 1 to automatically travel in accordance with the parking route M0 that is generated. When the vehicle 1 reverses, the display screen 11a of the display device 11 displays an image of the rear region of the vehicle 1 including the parking space P picked up by the image pickup device 16, as shown in Figure 5. When the parking route M0 includes the direction change stop point, the mark Q indicating the direction change stop point 102 is displayed and superimposed on the image of the rear region. The mark Q is displayed at a display position corresponding to the direction change stop point 102 in the image of the rear region. The image displayed on the display screen 11a is a moving image, and the image displayed on the display screen 11a changes as the vehicle 1 is moved.

While the automatic parking control is being executed, the obstacle detection device 13 detects the latest information on obstacles at regular intervals. The parking controller 10 updates the parking route M0 and the direction change stop point as necessary based on the latest information on the obstacles acquired from the obstacle detection device 13. The updating of the parking route M0 and the direction change stop point during the execution of the automatic parking control will be described later.

In step S50, the parking controller 10 determines whether or not the current position of the vehicle 1 has reached the parking space P which is the target parking spot. When it is determined that the current position of the vehicle 1 has not reached the target parking spot yet, the process returns to step S40 and the automatic parking control is continued. When it is determined that the current position of the vehicle 1 has reached the target parking spot, the automatic parking control is ended.

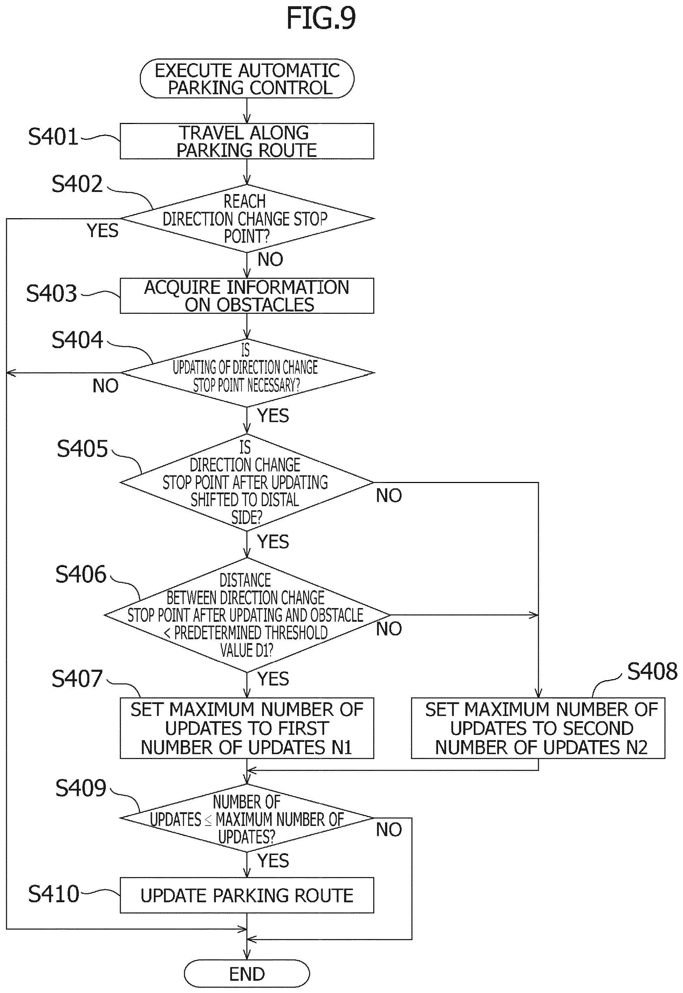

Next, the updating process of the parking route M0 and the direction change stop point during the execution of the automatic parking control in step S40 will be described in detail with reference to the flowchart in Figure 9. In the following description, for example, a case in which the vehicle 1 reverses from the initial position 101 toward the direction change stop point 102 in the parking route M0 shown in Figure 4 will be described.

In step S401, the parking controller 10 controls the engine 17, the braking system 18, the steering system 19, and the shift device 20 to cause the vehicle 1 to travel along the parking route M0. On the display screen 11a of the display device 11, a moving image including the mark Q indicating the direction change stop point 102 as shown in Figure 5 is displayed.

In step S402, the parking controller 10 determines whether or not the vehicle 1 has reached the direction change stop point 102 included in the parking route M0. When the current position of the vehicle 1 is at the direction change stop point 102 shown in Figure 4, a positive determination is made in step S402. At this time, the parking controller 10 resets the number of updates of the direction change stop point having been incremented up to the previous process to 0, and ends the process shown in Figure 9. When the vehicle 1 has not reached the direction change stop point 102 yet, a negative determination is made in step S402, and the process proceeds to step S403.

In step S403, the vehicle controller 10 acquires the latest information on the obstacles detected by the obstacle detection device 13. In step S404, based on the latest information on the obstacles acquired in step S403, the vehicle controller 10 determines whether or not it is necessary to update (reset) the direction change stop point 102 present in the traveling direction of the vehicle 1.

As shown in Figure 4, when the vehicle 1 reverses from the initial position 101 toward the direction change stop point 102, the vehicle controller 10 recognizes the latest information on the obstacle R2 present in the reversing direction based on the information detected by the rear sonar sensor 13a. When it is determined that it is necessary to update the direction change stop point 102 in the traveling direction of the vehicle 1 based on the detection of a new obstacle or the recognition of the detailed shape and position of the obstacle, the process proceeds to step S405. On the other hand, when it is determined that it is unnecessary to update the direction change stop point 102, the process shown in Figure 9 is ended. Also, in a case in which the parking route M0 includes no direction change stop point, a negative determination is made in step S404, and the process shown in Figure 9 is ended.

In step S405, the vehicle controller 10 determines whether or not the direction change stop point after the updating is shifted to the distal side from the vehicle 1 as compared with the direction change stop point 102 before the updating. For example, as shown in Figure 6, when it is determined that a direction change stop point 105 after the updating is shifted to the distal side from the vehicle 1, the process proceeds to step S406. On the other hand, as shown in Figure 7, for example, when it is determined that a direction change stop point 106 after the updating is shifted to the proximal side of the vehicle 1, the process proceeds to step S408.

In step S406, the vehicle controller 10 determines whether or not the distance between the direction change stop point 105 after the updating and the obstacle R2 present in the traveling direction of the vehicle 1, which is detected by the obstacle detection device 13, is less than the predetermined threshold value D1. In this case, the predetermined threshold value D1 is preset to an appropriate value so as to give no anxiety to the driver based on a detectable distance by the obstacle detection device 13 or the like.

In step S406, when it is determined that the distance between the direction change stop point 105 after the updating and the obstacle R2 is less than the predetermined threshold value D1, the process proceeds to step S407. In step S407, the maximum number of updates of the direction change stop point 102 present in the traveling direction of the vehicle 1 is set to the first number of updates N1. In this case, in consideration of the necessity of updating the direction change stop point 102 and anxiety given to the driver, which is caused when the direction change stop point 102 after the updating is shifted closer to the obstacle R2, etc., the first number of updates N1 is set to an appropriate value in advance through experiments or the like. The first number of updates N1 can be set to 1, for example. Alternatively, the first number of updates N1 may be set to 0. The first number of updates N1 may be set to a value of 2 or more several times.

When a negative determination is made in step S406, that is, when the distance between the direction change stop point 105 after the updating and the obstacle R2 is equal to or greater than the predetermined threshold value D1, or when the obstacle detection device 13 detects no obstacle in the traveling direction of the vehicle 1, the process proceeds to step S408. Here, the case in which the obstacle detection device 13 detects no obstacle in the traveling direction of the vehicle 1 includes a case in which an obstacle is actually present in the traveling direction but the obstacle detection device 13 detects no obstacle because the obstacle is present outside the detectable distance by the obstacle detection device 13.

In step S408, the maximum number of updates of the direction change stop point 102 present in the traveling direction of the vehicle 1 is set to the second number of updates N2, which is greater than the first number of updates N1. In a case in which the direction change stop point 106 after the updating is shifted closer to the vehicle 1, it is conceivable that a new obstacle is detected during the execution of the automatic parking control, or that the position of the obstacle R2 is closer than the position recognized at the initial position 101. Hence, it is configured to set the second number of updates N2 to a value considerably greater than the first number of updates N1 such that the direction change stop point 102 can be updated so as to prevent the vehicle from coming into contact with the obstacle. The second number of updates N2 is set to an appropriate value in advance (for example, a value of several tens or hundreds of times or greater).

In step S409, the vehicle controller 10 determines whether or not the number of updates of the direction change stop point 102 will be equal to or less than the maximum number of updates, which is set in step S407 or step S408, if the direction change stop point 102 is updated in the current process. When it is determined that the number of updates of the direction change stop point 102 is equal to or less than the maximum number of updates, the process proceeds to step S410, and the parking route M0 is updated. The vehicle controller 10 controls the display device 11 to display the mark Q at the display position corresponding to the direction change stop point after the updating in the image displayed on the display screen 11a. That is, as the parking route M0 is updated, the display position of the mark Q indicating the direction change stop point 102 displayed on the display device 11 is shifted to the proximal side or the distal side of the vehicle 1. This shifting of the display position of the mark Q prompts the driver to visually recognize that the direction change stop point 102 is shifted.

Furthermore, the parking controller 10 increments the number of updates of the direction change stop point 102 present in the traveling direction of the vehicle 1 and records the number of updates into a memory (not shown). Then, the process shown in Figure 9 is ended.

On the other hand, in step S409, when it is determined that the number of updates of the direction change stop point will be greater than the maximum number of updates, the parking controller 10 ends the process shown in Figure 9 without updating the parking route M0.

The process in step S40 described above is repeated until it is determined in step S50 that the current position of the vehicle 1 has reached the target parking spot. Therefore, if the direction change stop point 103 exists in a new traveling direction after the vehicle 1 reaches the direction change stop point 102 shown in Figure 4 or the direction change stop points 105, 106 after the updating shown in Figure 6 and Figure 7, the maximum number of updates is set also for the direction change stop point 103 in accordance with the flowchart shown in Figure 9.

**In** the automatic parking system 100 of the vehicle 1 according to the above-described first embodiment, the following operational effects can be obtained.

The automatic parking system 100 includes: the obstacle detection device 13 configured to detect an obstacle around the vehicle 1; the image pickup device 16 configured to pick up images of the peripheral region of the vehicle 1; the parking controller 10 configured to set the parking route M0 for moving the vehicle 1 to the target parking spot and perform the automatic parking control to cause the vehicle 1 to be parked at the target parking spot in accordance with the parking route M0, based on the information on the obstacles detected by the obstacle detection device 13 and the images of the peripheral region picked up by the image pickup device 16; and the display device 11 configured to display information about the automatic parking control. The display device 11 is configured to display the direction change stop points 102, 103 when the parking route M0 includes the direction change points 102, 103 at which the traveling direction of the vehicle is switched from forward to backward or backward to forward; and the parking controller 10 is configured to limit the maximum number of updates of the respective direction change stop points 102, 103 to the first number of updates N1 when the direction change stop points 102, 103 are updated based on the information on the obstacles detected by the obstacle detection device 13 during the execution of the automatic parking control.

When the direction change stop point is updated during execution of the automatic parking control so that the position at which the vehicle 1 is stopped for reversing the moving direction of the vehicle is shifted, the user might feel anxiety. The display position of the mark Q displayed on the display device 11 is also shifted as the direction change stop point is updated; thus, a user might be concerned that the system does not recognize the obstacle correctly, or might feel anxiety that the vehicle will come into contact with the obstacle. If a user who feels anxiety during the executing of the automatic parking control performs the braking operation by himself or herself, the automatic parking control is temporarily stopped; thus, it takes longer to park the vehicle at the target parking spot, which makes it difficult to exert the original convenience and comfort of the automatic parking control. In addition, this might cause increase of user's distrust relative to the automatic parking system.

To cope with this, in the updating of the direction change stop point based on the information on the obstacles, the upper limit is set to the maximum number of updates of the direction change stop point, thereby preventing the direction change stop point from being updated more than the maximum number of updates, which can provide the user with a sense of security. When the user uses the system with ease, the user does not have to manually perform unnecessary braking operation and steering operation, which results in enhancement of the convenience and comfort of the automatic parking system.

The parking controller 10 is configured to limit the maximum number of updates to the first number of updates N1 when the direction change stop point is shifted to the distal side from the vehicle 1 due to the updating of the direction change stop point, and to limit the maximum number of updates to the second number of updates N2, which is greater than the first number of updates N1, when the direction change stop point is shifted to the proximal side of the vehicle 1 due to the updating of the direction change stop point. In a case in which the direction change stop point is shifted to the proximal side, such a case is conceivable when a new obstacle is recognized during the execution of the automatic parking control, for example. In such a case, it is possible to reliably prevent the vehicle from coming into contact with the obstacle by setting the maximum number of updates of the direction change stop point to a greater number.

When the direction change stop point is shifted to the distal side from the vehicle 1 due to the updating of the direction change stop point, and when the distance between the direction change stop point after the updating and the obstacle is less than the predetermined threshold value D1, the parking controller 10 is configured to limit the maximum number of updates to the first number of updates N1; and when the distance between the direction change stop point after the updating and the obstacle is equal to or greater than the predetermined threshold D1, or when no obstacle is detected by the obstacle detection device 13, the parking controller 10 is configured to limit the maximum number of updates to the second number of updates N2, which is greater than the first number of updates N1.

The direction change stop point may be set in a state in which no obstacle is recognized by the sensors due to the positional relationship between the vehicle 1 and the obstacle, due to the recognition distance by the sensors of the obstacle detection device 13, or the like. In such a case, when the obstacle becomes recognized by the sensors as the vehicle 1 is moved during the execution of the automatic parking control, the direction change stop point may be shifted to the distal side of the vehicle 1. When the direction change stop point after the updating is shifted to the distal side of the vehicle 1, and when the distance between the direction change stop point after the updating and the obstacle is equal to or greater than the threshold value D1 or no obstacle is detected, the user feels no anxiety about a risk of coming into contact with the obstacle; therefore, necessary resetting of the direction change stop point can be carried out by increasing the maximum number of updates of the direction change stop point.

By setting the first number of updates N1 to 1, the user can easily recognize and learn that the direction change stop point might be changed at least once and thereby the user can have a sense of security for the system. Alternatively, by setting the first number of updates N1 to 0, it is possible to eliminate possibility of causing anxiety to the user due to change in the direction change stop point.

### Second Embodiment

Hereinafter, an automatic parking system of the vehicle according to a second embodiment of the present invention will be described in detail with reference to the drawings. The basic configuration of the automatic parking system of the vehicle according to the second embodiment is the same as that of the first embodiment described above. Hereinafter, differences from the first embodiment will be mainly described.

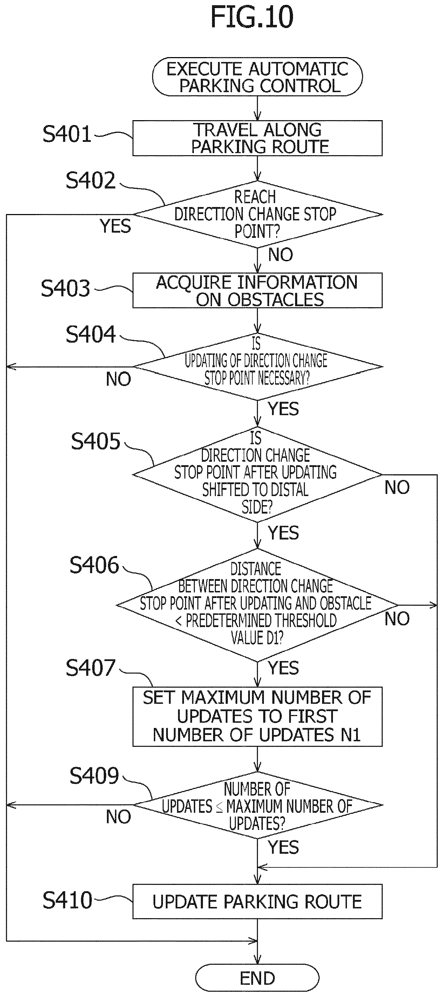

In the first embodiment described above, when the direction change stop point after the updating is shifted to the proximal side of the vehicle 1, the maximum number of updates is limited to the second number of updates N2, which is greater than the first number of updates N1. In the second embodiment, when the direction change stop point after the updating is shifted closer to the vehicle 1, the second number of updates N2 is set to infinity. That is, no limitation is provided on the maximum number of updates. The updating process of the parking route M0 and the direction change stop point during the execution of the automatic parking control in the second embodiment will be described in detail with reference to the flowchart in Figure 10.

In the flowchart shown in Figure 10, the process in steps S401 to S407 and steps S409 to S410 is the same as the process shown in Figure 9, and thus, the description thereof will be omitted. In the flowchart shown in Figure 10, step S408 of the flowchart in Figure 9 is omitted.

In step S405, when it is determined that the direction change stop point 105 after the updating is shifted to the distal side of the vehicle 1, the process proceeds to step S406 in the same manner as in the first embodiment described above. On the other hand, when it is determined that the direction change stop point 106 after the updating is shifted to the proximal side of the vehicle 1, the process proceeds to step S410 without limiting the number of updates of the direction change stop point 102, and the parking route M0 is updated.

In step S406, when it is determined that the distance between the direction change stop point 105 after the updating and the obstacle R2 is less than the predetermined threshold value D1, the process proceeds to step S407. On the other hand, when it is determined that the distance between the direction change stop point 105 after the updating and the obstacle R2 is equal to or greater than the predetermined threshold value D1, or when no obstacle is detected in the traveling direction of the vehicle 1 by the obstacle detection device 13, the process proceeds to step S410 without limiting the number of updates of the direction change stop point 102, and the parking route M0 is updated.

In the automatic parking system 100 of the vehicle 1 according to the second embodiment described above, the following operational effects can be obtained.

The parking controller 1 is configured to limit the maximum number of updates to the first number of updates N1 when the direction change stop point is shifted to the distal side from the vehicle 1 due to the updating of the direction change stop point, and it is configured not to limit the maximum number of updates when the direction change stop point is shifted to the proximal side of the vehicle 1 due to the updating of the direction change stop point.

When the direction change stop point is shifted to the proximal side, such a case is conceivable when a new obstacle is recognized during the execution of the automatic parking control, for example. In such a case, it is possible to reliably prevent the vehicle from coming into contact with the obstacle by providing no limitation on the maximum number of updates of the direction change stop point.

The parking controller 1 is configured to limit the maximum number of updates to the first number of updates N1 when the direction change stop point is shifted to the distal side from the vehicle 1 due to the updating of the direction change stop point and when the distance between the direction change stop point after the updating and the obstacle is less than the predetermined threshold D1, and it is also configured to provide no limitation on the maximum number of updates when the distance between the direction change stop point after the updating and the obstacle is equal to or greater than the threshold value D1 or when no obstacle is detected by the obstacle detection device 13.

When the direction change stop point after the updating is shifted to the distal side of the vehicle 1 and the distance between the direction change stop point after the updating and the obstacle is equal to or greater than the predetermined threshold D1, or when no obstacle is detected, the user feels no risk of coming into contact with the obstacle; therefore, by providing no limitation on the maximum number of updates of the direction change stop point, it is possible to perform a necessary resetting of the direction change stop point.

The embodiments of the present invention have been described in detail above; however, the present invention is not limited to the above-described embodiments, and various modifications and changes can be made based on the technical concept of the present invention, which is defined by the claims.

### Modification Example 1

In the above-described embodiments, the first number of updates N1, which is used when the maximum number of updates of the direction change stop point is limited, is set to an appropriate value in advance; however, the first number of updates N1 may be selectable according to the user operation. In this case, for example, it may be configured that the operation input device 12 is equipped with a selection switch for selecting the number of updates, which is operated by the driver to select the first number of updates N1. The automatic parking system 100 may be configured to be equipped with a selection member of selecting the number of updates, which is operated not by a driver, but by a dealer. The first number of updates N1 selectable in accordance with the user operation may be set within a range of 0 to several times, for example.

By being configured to set the first number of updates N1 to be selectable in accordance with the user operation, it is possible to set the maximum number of updates desired by the user in accordance with the preference of the user.

### Modification Example 2

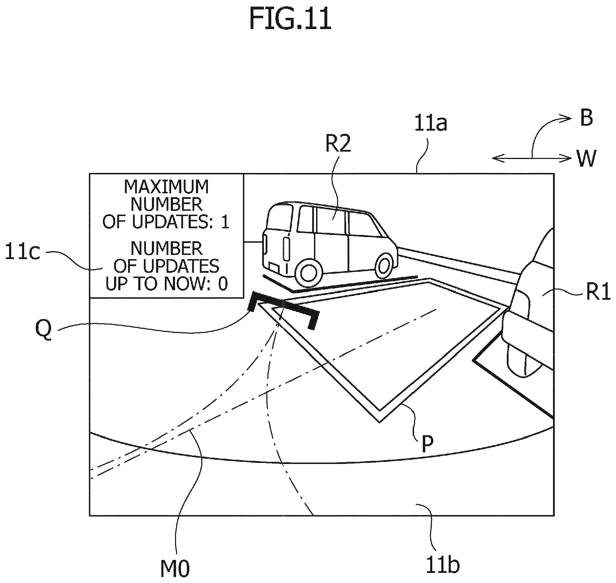

It may be configured such that, the display screen 11a of the display device 11 displays the information about the number of updates of the direction change stop point while the automatic parking control is being performed by the automatic parking system 100. Figure 11 shows a display example of the display device 11 that displays the information about the number of updates of the direction change stop point.

As shown in Figure 11, the display screen 11a of the display device 11 has a first display area 11b displaying an image of the rear region of the vehicle 1 including the parking space P imaged by the image pickup device 16, and a second display area 11c displaying information about the number of updates of the direction change stop point. **In** the first display area 11b, the mark Q indicating the direction change stop point 102 is displayed and superimposed on the image of the rear region, as in the display example shown in Figure 5.

In the second display area 11c, the maximum number of updates of the direction change stop point 102 in the traveling direction of the vehicle 1 and the number of updates of the direction change stop point 102 up to now are displayed. The maximum number of updates and the number of updates up to now can be displayed in numerals, bar graphs, etc. The second display area 11c is smaller than the first display area 11b, and can be arranged so as to overlap a part of the first display area 11b, for example.

In this manner, the display device 11 is configured to further display the first number of updates N1 that is the maximum number of updates and the number of updates of the direction change stop point up to now. By configuring to display the maximum number of updates of the direction change stop point and the number of updates of the direction change stop point up to now, the driver can visibly recognize the number of changes to possibly be made in the direction change stop point present in the traveling direction of the vehicle 1 and the number of changes having been made in the direction change stop point up to now, which provides a sense of security for the driver. It may be configured to display only the maximum number of updates of the direction change stop point on the second display area 11c.

### Other Modifications

In the above-described embodiments, an example in which the obstacle detection device 13 includes the rear sonar sensor 13a and the front sonar sensor 13b has been described. However, the present invention is not limited to this, and an infrared lidar, a millimeter wave radar, or the like can be used in place of or in addition to the rear sonar sensor 13a and the front sonar sensor 13b.

In the above-described embodiments, in the automatic parking system 100, the parking controller 10 is configured to control the engine 17, the braking system 18, the steering system 19, and the shift device 20 so as to cause the vehicle 1 to automatically travel in accordance with the parking route M0 that is generated, including the switching of the vehicle traveling from backward to forward and from forward to backward. However, the present invention is not limited to this; it may be configured such that after the vehicle is temporarily stopped at the direction change stop point, the driver manually operates the switching of the vehicle traveling from backward to forward or from forward to backward. Furthermore, it may also be configured to automatically control the traveling of the vehicle 1 only in the reverse direction, and to cause the vehicle 1 to travel in the forward direction by the operation by the driver. The image of the rear region and the mark indicating the direction change stop point may be displayed on the display screen 11a of the display device 11 only when the vehicle 1 travels in the reverse direction, and nothing may be displayed on the display screen 11a when the vehicle 1 travels in the forward direction.

### [Reference Signs List]

1 Vehicle
10 Parking controller
11 Display device
11a Display screen
11b, 11c First display area, second display area
12 Operation input device
13 Obstacle detection device
13a, 13b Rear sonar sensor, front sonar sensor
16 Image pickup device
100 Automatic parking system
102, 103, 105, 106 Direction change stop point
M0, M1 Parking route
P Parking space (target parking spot)
Q Mark indicating direction change stop point
R1, R2 Obstacle

## Claims

1. An automatic parking system (100) comprising:
an obstacle detection device (13) configured to detect an obstacle (R1, R2) around a vehicle (1):
an image pickup device (16) configured to image a peripheral region of the vehicle (1);
a parking controller (10) configured to set a parking route for moving the vehicle (1) to a target parking spot (P) based on information on the obstacle (R1, R2) detected by the obstacle detection device (13) and an image of the peripheral region picked up by the image pickup device (16), and to perform automatic parking control to park the vehicle (1) at the target parking spot (P) in accordance with the parking route; and
a display device (11) configured to display information about the automatic parking control, wherein:
the display device (11) is configured to display a direction change stop point (102, 103, 105, 106) when the direction change stop point (102, 103, 105, 106) at which a traveling direction of the vehicle (1) is switched from forward to backward, or from backward to forward, is included in the parking route; and
the parking controller (10) being **characterized in that** it is configured to limit a maximum number of updates of the direction change stop point (102, 103, 105, 106) to a first number of updates (N1) when updating the parking route based on the information on the obstacle (R1, R2) detected by the obstacle detection device (13) during execution of the automatic parking control.

2. The automatic parking system (100) according to claim 1, wherein
the parking controller (10) is configured:
to limit the maximum number of updates to the first number of updates (N1) when the direction change stop point (102, 103, 105, 106) is shifted to a distal side from the vehicle (1) due to updating of the direction change stop point (102, 103, 105, 106); and
to limit the maximum number of updates to a second number of updates (N2), which is greater than the first number of updates (N1), when the direction change stop point (102, 103, 105, 106) is shifted to a proximal side of the vehicle (1) due to the updating of the direction change stop point (102, 103, 105, 106).

3. The automatic parking system (100) according to claim 1 or 2, wherein
the parking controller (10) is configured:
to limit the maximum number of updates to the first number of updates (N1) when the direction change stop point (102, 103, 105, 106) is shifted to a distal side from the vehicle (1) due to updating of the direction change stop point (102, 103, 105, 106); and
not to limit the maximum number of updates when the direction change stop point (102, 103, 105, 106) is shifted to a proximal side of the vehicle (1) due to the updating of the direction change stop point (102, 103, 105, 106).

4. The automatic parking system (100) according to any one of claims 1 to 3, wherein
in a case in which the direction change stop point (102, 103, 105, 106) is shifted to a distal side from the vehicle (1) due to updating of the direction change stop point (102, 103, 105, 106), the parking controller (10) is configured:
to limit the maximum number of updates to the first number of updates (N1) when a distance between the direction change stop point (102, 103, 105, 106) after the updating and the obstacle (R1, R2) is less than a predetermined threshold value (D1); and
to limit the maximum number of updates to a second number of updates (N2), which is greater than the first number of updates (N1), when the distance between the direction change stop point (102, 103, 105, 106) after the updating and the obstacle (R1, R2) is equal to or greater than the predetermined threshold value (D1), or when no obstacle is detected by the obstacle detection device (13).

5. The automatic parking system (100) according to any one of claims 1 to 3, wherein
in a case in which the direction change stop point (102, 103, 105, 106) is shifted to a distal side from the vehicle (1) due to updating of the direction change stop point (102, 103, 105, 106), the parking controller is configured:
to limit the maximum number of updates to the first number of updates (N1) when a distance between the direction change stop point (102, 103, 105, 106) after the updating and the obstacle (R1, R2) is less than a predetermined threshold value (D1); and
not to limit the maximum number of updates when the distance between the direction change stop point (102, 103, 105, 106) after the updating and the obstacle (R1, R2) is equal to or greater than the predetermined threshold value (D1) or when no obstacle is detected by the obstacle detection device (13).

6. The automatic parking system (100) according to any one of claims 1 to 5, wherein
the first number of updates (N1) is 1.

7. The automatic parking system (100) according to any one of claims 1 to 5, wherein
the first number of updates (N1) is 0.

8. The automatic parking system (100) according to any one of claims 1 to 5, wherein
the first number of updates (N1) is configured to be selectable by user operation.

9. The automatic parking system (100) according to any one of claims 1 to 8, wherein
the display device (11) is configured to further display the first number of updates (N1) that is the maximum number of updates, and a number of updates of the direction change stop point (102, 103, 105, 106) up to now.

## Patentansprüche

1. Automatisches Parksystem (100), umfassend:
eine Hindernisdetektionsvorrichtung (13), welche dazu eingerichtet ist, ein Hindernis (R1, R2) um ein Fahrzeug (1) herum zu detektieren:
eine Bildaufnahmevorrichtung (16), welche dazu eingerichtet ist, einen peripheren Bereich des Fahrzeugs (1) abzubilden;
eine Parksteuereinheit (10), welche dazu eingerichtet ist, eine Parkroute zum Bewegen des Fahrzeugs (1) auf einen Zielparkplatz (P) auf Grundlage von Informationen über das Hindernis (R1, R2), welche durch die Hindernisdetektionsvorrichtung (13) detektiert werden, und eines Bilds des peripheren Bereichs festzulegen, welches durch die Bildaufnahmevorrichtung (16) aufgenommen ist, und eine automatische Parksteuerung durchzuführen, um das Fahrzeug (1) an dem Zielparkplatz (P) in Übereinstimmung mit der Parkroute zu parken; und
eine Anzeigevorrichtung (11), welche dazu eingerichtet ist, Informationen über die automatische Parksteuerung anzuzeigen, wobei:
die Anzeigevorrichtung (11) dazu eingerichtet ist, einen Richtungsänderung-Haltepunkt (102, 103, 105, 106) anzuzeigen, wenn der Richtungsänderung-Haltepunkt (102, 103, 105, 106), an welchem eine Fahrtrichtung des Fahrzeugs (1) von vorwärts zu rückwärts oder rückwärts zu vorwärts gewechselt wird, in der Parkroute umfasst ist; und
wobei die Parksteuereinheit (10) **dadurch gekennzeichnet ist, dass** sie dazu eingerichtet ist, eine maximale Anzahl von Aktualisierungen des Richtungsänderung-Haltepunkts (102, 103,105, 106) auf eine erste Anzahl von Aktualisierungen (N1) zu begrenzen, wenn die Parkroute auf Grundlage der Informationen über die Hindernisse (R1, R2) aktualisiert wird, welche durch die Hindernisdetektionsvorrichtung (13) während eines Durchführens der automatischen Parksteuerung detektiert werden.

2. Automatisches Parksystem (100) nach Anspruch 1, wobei
die Parksteuereinheit (10) dazu eingerichtet ist:
die maximale Anzahl von Aktualisierungen auf die erste Anzahl von Aktualisierungen (N1) zu begrenzen, wenn der Richtungsänderung-Haltepunkt (102, 103, 105, 106) auf eine distale Seite von dem Fahrzeug (1) aufgrund eines Aktualisierens des Richtungsänderung-Haltepunkts (102, 103, 105, 106) verlagert wird; und
die maximale Anzahl von Aktualisierungen auf eine zweite Anzahl von Aktualisierungen (N2), welche größer als die erste Anzahl von Aktualisierungen (N1) ist, zu begrenzen, wenn der Richtungsänderung-Haltepunkt (102, 103, 105, 106) auf eine proximale Seite des Fahrzeugs (1) aufgrund des Aktualisierens des Richtungsänderung-Haltepunkts (102, 103, 105, 106) verlagert wird.

3. Automatisches Parksystem (100) nach Anspruch 1 oder 2, wobei
die Parksteuereinheit (10) dazu eingerichtet ist,
die maximale Anzahl von Aktualisierungen auf die erste Anzahl von Aktualisierungen (N1) zu begrenzen, wenn der Richtungsänderung-Haltepunkt (102, 103, 105, 106) auf eine distale Seite von dem Fahrzeug (1) aufgrund eines Aktualisierens des Richtungsänderung-Haltepunkts (102, 103, 105, 106) verlagert wird; und
die maximale Anzahl von Aktualisierungen nicht zu begrenzen, wenn der Richtungsänderung-Haltepunkt (102, 103, 105, 106) auf eine proximale Seite des Fahrzeugs (1) aufgrund des Aktualisierens des Richtungsänderung-Haltepunkts (102, 103, 105, 106) verlagert wird.

4. Automatisches Parksystem (100) nach einem der Ansprüche 1 bis 3, wobei
in einem Fall, in welchem der Richtungsänderung-Haltepunkt (102, 103, 105, 106) auf eine distale Seite von dem Fahrzeug (1) aufgrund eines Aktualisierens des Richtungsänderung-Haltepunkts (102, 103, 105, 106) verlagert wird, die Parksteuereinheit (10) dazu eingerichtet ist:
die maximale Anzahl von Aktualisierungen auf die erste Anzahl von Aktualisierungen (N1) zu begrenzen, wenn ein Abstand zwischen dem Richtungsänderung-Haltepunkt (102, 103, 105, 106) nach dem Aktualisieren und dem Hindernis (R1, R2) geringer als ein vorbestimmter Schwellenwert (D1) ist; und
die maximale Anzahl von Aktualisierungen auf eine zweite Anzahl von Aktualisierungen (N2), welche größer als die erste Anzahl von Aktualisierungen (N1) ist, zu begrenzen, wenn der Abstand zwischen dem Richtungsänderung-Haltepunkt (102, 103, 105, 106) nach dem Aktualisieren und dem Hindernis (R1, R2) gleich wie oder größer als der vorbestimmte Schwellenwert (D1) ist, oder wenn kein Hindernis durch die Hindernisdetektionsvorrichtung (13) detektiert wird.

5. Automatisches Parksystem (100) nach einem der Ansprüche 1 bis 3, wobei
in einem Fall, in welchem der Richtungsänderung-Haltepunkt (102, 103, 105, 106) auf eine distale Seite von dem Fahrzeug (1) aufgrund eines Aktualisierens des Richtungsänderung-Haltepunkts (102, 103, 105, 106) verlagert wird, die Parksteuereinheit dazu eingerichtet ist:
die maximale Anzahl von Aktualisierungen auf die erste Anzahl von Aktualisierungen (N1) zu begrenzen, wenn ein Abstand zwischen dem Richtungsänderung-Haltepunkt (102, 103, 105, 106) nach dem Aktualisieren und dem Hindernis (R1, R2) geringer als ein vorbestimmter Schwellenwert (D1) ist; und
die maximale Anzahl von Aktualisierungen nicht zu begrenzen, wenn der Abstand zwischen dem Richtungsänderung-Haltepunkt (102, 103, 105, 106) nach dem Aktualisieren und dem Hindernis (R1, R2) gleich wie oder größer als der vorbestimmte Schwellenwert (D1) ist, oder wenn kein Hindernis durch die Hindernisdetektionsvorrichtung (13) detektiert wird.

6. Automatisches Parksystem (100) nach einem der Ansprüche 1 bis 5, wobei
die erste Anzahl von Aktualisierungen (N1) 1 ist.

7. Automatisches Parksystem (100) nach einem der Ansprüche 1 bis 5, wobei
die erste Anzahl von Aktualisierungen (N1) 0 ist.

8. Automatisches Parksystem (100) nach einem der Ansprüche 1 bis 5, wobei
die erste Anzahl von Aktualisierungen (N1) dazu eingerichtet ist, durch eine Nutzerbedienung auswählbar zu sein.

9. Automatisches Parksystem (100) nach einem der Ansprüche 1 bis 8, wobei
die Anzeigevorrichtung (11) dazu eingerichtet ist, ferner die erste Anzahl von Aktualisierungen (N1), welche die maximale Anzahl von Aktualisierungen ist, und eine Anzahl von Aktualisierungen des Richtungsänderung-Haltepunkts (102, 103, 105, 106) bis zu einem jetzigen Zeitpunkt anzuzeigen.

## Revendications

1. Système de stationnement automatique (100), comprenant :
un dispositif de détection d'obstacle (13) configuré pour détecter un obstacle (R1, R2) autour d'un véhicule (1) :
un dispositif de capture d'image (16) configuré pour imager une région périphérique du véhicule (1) ;
un dispositif de commande de stationnement (10) configuré pour définir un itinéraire de stationnement pour déplacer le véhicule (1) vers un emplacement de stationnement cible (P) sur la base d'informations sur l'obstacle (R1, R2) détecté par le dispositif de détection d'obstacle (13) et d'une image de la région périphérique capturée par le dispositif de capture d'image (16), et pour effectuer une commande de stationnement automatique pour stationner le véhicule (1) au niveau de l'emplacement de stationnement cible (P) conformément à l'itinéraire de stationnement ; et
un dispositif d'affichage (11) configuré pour afficher des informations sur la commande de stationnement automatique, dans lequel :
le dispositif d'affichage (11) est configuré pour afficher un point d'arrêt de changement de direction (102, 103, 105, 106) lorsque le point d'arrêt de changement de direction (102, 103, 105, 106) auquel une direction de déplacement du véhicule (1) est commutée d'avant en arrière, ou d'arrière en avant, est inclus dans l'itinéraire de stationnement ; et
le dispositif de commande de stationnement (10) étant **caractérisé en ce qu'**il est configuré pour limiter un nombre maximal de mises à jour du point d'arrêt de changement de direction (102, 103, 105, 106) à un premier nombre de mises à jour (N1) lors de la mise à jour de l'itinéraire de stationnement sur la base des informations sur l'obstacle (R1, R2) détectées par le dispositif de détection d'obstacle (13) lors de l'exécution de la commande de stationnement automatique.

2. Système de stationnement automatique (100) selon la revendication 1, dans lequel le dispositif de commande de stationnement (10) est configuré :
pour limiter le nombre maximal de mises à jour au premier nombre de mises à jour (N1) lorsque le point d'arrêt de changement de direction (102, 103, 105, 106) est déplacé vers un côté distal à partir du véhicule (1) en raison de la mise à jour du point d'arrêt de changement de direction (102, 103, 105, 106) ; et
pour limiter le nombre maximal de mises à jour à un second nombre de mises à jour (N2), qui est supérieur au premier nombre de mises à jour (N1), lorsque le point d'arrêt de changement de direction (102, 103, 105, 106) est déplacé vers un côté proximal du véhicule (1) en raison de la mise à jour du point d'arrêt de changement de direction (102, 103, 105, 106).

3. Système de stationnement automatique (100) selon la revendication 1 ou 2, dans lequel
le dispositif de commande de stationnement (10) est configuré :
pour limiter le nombre maximal de mises à jour au premier nombre de mises à jour (N1) lorsque le point d'arrêt de changement de direction (102, 103, 105, 106) est déplacé vers un côté distal à partir du véhicule (1) en raison de la mise à jour du point d'arrêt de changement de direction (102, 103, 105, 106) ; et
pour ne pas limiter le nombre maximal de mises à jour lorsque le point d'arrêt de changement de direction (102, 103, 105, 106) est déplacé vers un côté proximal du véhicule (1) en raison de la mise à jour du point d'arrêt de changement de direction (102, 103, 105, 106).

4. Système de stationnement automatique (100) selon l'une quelconque des revendications 1 à 3, dans lequel
dans un cas où le point d'arrêt de changement de direction (102, 103, 105, 106) est déplacé vers un côté distal du véhicule (1) en raison d'une mise à jour du point d'arrêt de changement de direction (102, 103, 105, 106), le dispositif de commande de stationnement (10) est configuré :
pour limiter le nombre maximal de mises à jour au premier nombre de mises à jour (N1) lorsqu'une distance entre le point d'arrêt de changement de direction (102, 103, 105, 106) après la mise à jour et l'obstacle (R1, R2) est inférieure à une valeur seuil prédéterminée (D1) ; et
pour limiter le nombre maximal de mises à jour à un second nombre de mises à jour (N2), qui est supérieur au premier nombre de mises à jour (N1), lorsque la distance entre le point d'arrêt de changement de direction (102, 103, 105, 106) après la mise à jour et l'obstacle (R1, R2) est égale ou supérieure à la valeur seuil prédéterminée (D1), ou lorsqu'aucun obstacle n'est détecté par le dispositif de détection d'obstacle (13).

5. Système de stationnement automatique (100) selon l'une quelconque des revendications 1 à 3, dans lequel
dans un cas où le point d'arrêt de changement de direction (102, 103, 105, 106) est déplacé vers un côté distal à partir du véhicule (1) en raison d'une mise à jour du point d'arrêt de changement de direction (102, 103, 105, 106), le dispositif de commande de stationnement est configuré :
pour limiter le nombre maximal de mises à jour au premier nombre de mises à jour (N1) lorsqu'une distance entre le point d'arrêt de changement de direction (102, 103, 105, 106) après la mise à jour et l'obstacle (R1, R2) est inférieure à une valeur seuil prédéterminée (D1) ; et
pour ne pas limiter le nombre maximal de mises à jour lorsque la distance entre le point d'arrêt de changement de direction (102, 103, 105, 106) après la mise à jour et l'obstacle (R1, R2) est égale ou supérieure à la valeur seuil prédéterminée (D1) ou lorsqu'aucun obstacle n'est détecté par le dispositif de détection d'obstacle (13).

6. Système de stationnement automatique (100) selon l'une quelconque des revendications 1 à 5, dans lequel
le premier nombre de mises à jour (N1) est 1.

7. Système de stationnement automatique (100) selon l'une quelconque des revendications 1 à 5, dans lequel
le premier nombre de mises à jour (N1) est 0.

8. Système de stationnement automatique (100) selon l'une quelconque des revendications 1 à 5, dans lequel
le premier nombre de mises à jour (N1) est configuré pour être sélectionnable par l'opération d'utilisateur.

9. Système de stationnement automatique (100) selon l'une quelconque des revendications 1 à 8, dans lequel
le dispositif d'affichage (11) est configuré pour afficher en outre le premier nombre de mises à jour (N1) qui est le nombre maximal de mises à jour, et un nombre de mises à jour du point d'arrêt de changement de direction (102, 103, 105, 106) jusqu'à présent.
